# EUROPEAN PATENT SPECIFICATION

(11) **EP 4 031 851 B1**
(45) Date of publication and mention of the grant of the patent: **12.07.2023**
(21) Application number: 20788714.2
(22) Date of filing: 17.09.2020
(51) Int. Cl.: G01N 17/00

(54) **MOUNTABLE SENSOR**
MONTIERBARER SENSOR
CAPTEUR MONTABLE

(30) Priority: 17.09.2019 EP 19197862
(43) Date of publication of application: 27.07.2022
(73) Proprietor: Trisense AS, 5160 Laksevåg (NO)
(72) Inventor: GISMERVIK, Øystein, 5170 Bjørndalstræ (NO); SANDØ, Jørn, 5236 Rådal (NO)
(74) Representative: Gill Jennings & Every LLP
(86) International application number: PCT/EP2020/076055
(87) International publication number: WO 2021/053121

(56) References cited:
- WO-A1-2015/059594
- KR-A- 20130 140 256
- US-A- 4 788 871
- US-A- 5 199 297
- US-A1- 2012 056 634
- US-B2- 6 834 529
- US-B2- 8 764 289

## Description

### TECHNICAL FIELD

The present invention relates to a mountable sensor for measuring a parameter of the internal volume of a conduit or chamber such as a pipe, tank, valve or duct where the mountable sensor is attachable to an outer surface of the conduit or chamber and measures one or more parameters of the internal atmosphere within the conduit or chamber.

### BACKGROUND

A major cost for most offshore and many onshore process installations is monitoring and addressing corrosion under insulation (CUI). CUI occurs when water is absorbed by or collected within the insulation of pipework, for example due to water ingress due to poorly designed or installed cladding, cladding joint breakdown or mechanical damage to the cladding. Processing plants must be constantly monitored to identify CUI and sections of pipework which are affected must be identified and the problem addressed by replacing effected insulation or pipework. This process is time consuming and costly - often contributing more than 50% of all maintenance cost.

The most common methods of detecting corrosion developing under insulation are destructive techniques such as cutting windows into insulation for localised inspection. Clearly the efficacy of such techniques relies on selecting the correct parts of the pipework to inspect and suffers from the disadvantage that the pipework must be repaired after testing. Certain non-destructive testing methods exist such as pulsed eddy current detection or guided wave ultrasonics but these techniques do not reliably identify CUI and require sensors to be fitted either prior to installation or distributed over a processing network, which can be time consuming and require significant manpower.

A common difficulty to all known methods is that pipework over a large area must be monitored and accordingly there are difficulties and expense involved in accessing and testing pipework over a large area which may be difficult to reach.

Accordingly there exists a need for a system for monitoring CUI and other parameters within enclosed chambers and conduits which addresses some of the problems identified above. US5199297 discloses a sensor in a housing that is inserted through a thin wall by a piercing tip, wherein the housing is fixed in place by external bosses. US6834529 discloses a sensor in a housing to be inserted through a cladding, wherein the housing serves as a perforation tool.

### SUMMARY OF THE INVENTION

According to a first aspect of the present invention there is provided a mountable sensor for measuring a parameter within a conduit or chamber comprising an outer wall defining an enclosed internal volume, the mountable sensor comprising: a sensor housing comprising a first opening; a sensing element positioned within the housing; a moveable mounting tool comprising a shaft and, at a distal end of the shaft, a perforation element configured to perforate the outer wall of a conduit or chamber and a fixation element arranged to subsequently enter the perforation and engage when inside the outer wall to prevent retraction of the mounting tool; wherein the mounting tool is configured to extend out through the first opening in the sensor housing such that, when the mountable sensor is positioned against the outer wall of a conduit or chamber in use, the perforation element penetrates the outer wall to produce a perforation and the fixation element enters the perforation and engages to secure the sensor housing to the outer wall; thereby placing the sensing element in communication with the internal volume of the outer wall through the perforation.

Since the mountable sensor can be applied externally to, i.e. to an outer surface of, an enclosed conduit or chamber, without requiring removal of parts of the outer wall or cladding, the sensors can be installed in situ, resulting in a reduction in maintenance cost associated with removing and replacing parts of the chamber or conduit. Furthermore, since the moveable mounting tool is able to both perforate and secure the sensor to the outer wall of a conduit in a single action, the moveable mounting tool may be installed in a straightforward manner by the application of a single driving force to the mounting tool. This allows for a human operator to rapidly install multiple mountable sensors across a processing network in reduced amount of time, reducing the expense and manpower required. After the straightforward initial installation, the sensors can continuously monitor the equipment at little ongoing cost. The mountable sensor allows for mounting on all thin-plated process equipment for monitoring conditions on either side of the plate (i.e. by attaching sensors within or external to the sensor housing) or adding extra functionality such as drainage.

The terms conduit and chamber are intended to cover all types of liquid or gas transporting or storage equipment, such as pipes, valves, tanks, and ducting. The mountable sensor is particularly suited for use on cladded processing equipment, such as cladded pipework, using in processing plants, in particular cladded insulated equipment. This includes cladded pipework, valves, tanks, and carbon process vessels. The mountable sensor is particularly preferably configured for detection of corrosion under the cladding of cladded and insulated equipment, where corrosion under insulation (CUI) can develop from the ingress of water. Where the term "cladding" is used this could equally be replaced with "outer wall", i.e. the outer housing of the fluidic passage, such as the metal plating of an air duct.

In particular, preferably the mountable sensor is configured for measuring a parameter within cladded and insulated process equipment comprising an outer cladding layer and an internal insulation layer; and, in use, the perforation element is configured to penetrate the cladding of the cladded and insulated process equipment to produce a perforation and the fixation element is configured to enter the perforation and engage to secure the sensor housing to an outer surface of the cladding; thereby placing the sensing element in communication with the internal volume of the cladding through the perforation. In this way, the mountable sensor can measure one or more parameters indicative of the build-up or risk of development of corrosion under insulation (CUI). In particular, the perforation in the cladding provides communication between the insulation and the sensing element such that properties such as the temperature and/or humidity within the insulation can be monitored. The mountable sensor is preferably configured to provide a sealed fluidic communication path between the internal volume of the cladding and the sensor housing, such that the cladding remains sealed, preventing further ingress of liquid.

The sensing element may alternatively be positioned on the mounting tool itself or on an outer surface of the housing, for example on a surface of the housing near the first opening such that it is placed in communication with the internal volume of the cladding through the perforation in use.

The perforation element preferably comprises a sharp or abrasive surface for penetrating the outer wall of the conduit or chamber for example for penetrating the cladding of the cladded pipework and other process equipment. In particular, the perforation element may be configured for perforating stainless steel (such as stainless steel 304 or 316) or aluminium. Preferably the perforation element is configured to perforate an outer wall of a thickness between 0.1 mm to 10 mm, more preferably a thickness between 0.4 mm to 1 mm, however the invention can be readily adapted for use with outer walls of other thicknesses.

Preferably the perforation element is configured to apply a perforating or penetrating action when a force is applied to the mounting tool. The mountable sensor may comprise an internal driver configured to apply a force to mounting tool to cause it to extend through the first opening and perforate the outer wall in use. Preferably the mounting tool is configured to move under an externally applied force, for example by a human operator such that the cost of the unit is reduced.

Preferably the mounting tool is configured to move between a retracted configuration in which the perforation element and fixation element are substantially retracted within the sensor housing and an extended configuration in which the perforation and fixation elements move through the first opening so as to engage the outer wall of the conduit or chamber in use. In other words, the mounting tool is moveable relative to the sensor housing to protrude through the first opening in order to engage an adjacent surface of the outer wall.

The phrase "placing the sensing element in communication with the internal volume of the outer wall through the perforation" means that the sensor is arranged such that it can sense a parameter of the internal properties within internal volume through the perforation, for example it is placed in fluidic communication, such as to allow air and/or liquid to pass from within the outer wall through the perforation into the sensor housing and into contact with the sensing element.

Preferably the perforation element is provided on a far distal end of the mounting tool shaft and the fixation element is positioned on the proximal side of the perforation element such that the perforation element meets the outer wall first to produce the perforation and the fixation element passes through the perforation after the perforation element as the mounting tool continues to extend.

Preferably the fixation element is configured so to pass through a perforation produced by the perforation element in one direction but to resist passage through the perforation back in the opposite direction. In particular the fixation element may be shaped to have a smaller diameter at a distal end and a larger diameter and, preferably, a proximal end with angled edge between the distal and proximal end to encourage the fixation element through the perforation when extending distally into the outer wall but prevent retraction back through the perforation.

Preferably the perforation element comprises a drill bit and the shaft is rotatable to provide a drilling action for drilling through the outer wall in use, such as the cladding of cladded process equipment. The entirety of the shaft or just a portion of the shaft may be rotatable in order to rotate the drill bit to provide the drilling action. The drill bit preferably comprises one or more abrasive edges or surfaces configured for milling through outer wall material, in particular metal cladding material such as steel or aluminium. Drilling provides a reliable way to reproducibly provide a perforation of known size in the outer wall. In some examples of the invention, the shaft of the mounting tool is preferably arranged to accept a driver which engages the shaft to provide a rotational force and a linear force along the axis of the shaft.

In some examples of the invention the perforation element comprises a puncturing element and the shaft is configured to move axially to apply an axial puncturing force to perforate the outer wall in use. The puncturing element preferably comprises a sharp pointed end for piercing the outer wall, for example the cladding of cladded processing equipment. The shaft of the mounting tool is preferably configured to accept a linear force, such as a hammer action applied to a proximal end of the shaft to drive the puncturing element into the cladding.

Preferably the fixation element comprises an expandable fixation element configured to pass through the perforation in the outer wall in a collapsed configuration and subsequently expand into an expanded configuration within the outer wall to prevent retraction of the mounting tool. For example the fixation element may be shaped so as to pass through the perforation in one direction but resist passage back through the perforation in the opposite direction. In some example the fixation element comprises angled leading edges between a distal end with a smaller diameter and a proximal end of greater diameter. In this way the fixation element is encouraged through the perforation when travelling distally but resists movement through the perforation when travelling proximally.

Preferably the expandable fixation element is biased into the expanded configuration. For example the fixation element may be flexible such that it can be compressed radially inward to allow it to pass through the perforation before expanding out again to prevent it passing back through the perforation. The elastic flex may be provided by one or more springs or flex in the material of the fixation element. The sensor housing may further comprise a delivery passage; wherein the fixation element is held within the delivery passage when the mounting tool is in a retracted configuration and the delivery passage constrains the fixation element into the collapsed configuration. In this way the fixation element expands into the expanded configuration as it passes out of the delivery passage and through the perforation.

Preferably the expandable fixation element comprises a plurality of prongs arranged around the circumference of the shaft, the prongs arranged to move radially outward when they have passed through the perforation to engage the inner surface of the outer wall around the perforation and prevent retraction of the mounting tool. In particular the prongs, or barbs, may extend from the shaft next to the perforation element proximally and away from the shaft. In this way the prongs have an angled leading edge from the shaft to their points, the prongs may deform radially inward under the force of the perforation on their angled end to allow them to pass through the perforation before expanding outward when inside the outer wall to lock in place.

In some examples of the invention the fixation element comprises a threaded portion of the shaft configured to screw into the perforation in the outer wall to prevent retraction of the mounting tool. In particular a portion of the shaft behind (i.e. proximal to) the perforation element comprises a series of ridges which bite into the edges of the perforation as the shaft rotates and through the perforation. Preferably, in these examples, the perforation element comprises a drill bit. Preferably the threaded portion of the shaft has a diameter which is greater or equal to the diameter of the drill bit to improve the connection between the ridges of the thread and the edges of the perforation. Preferably the shaft further comprises a passageway arranged to provide the communication between the internal volume of the conduit and the sensor element when the threaded portion is screwed into the perforation.

Preferably the mountable sensor further comprises a biasing element arranged to apply a biasing force to the shaft in a direction so as to retract the mounting tool once the fixation element enters the perforation to lock the fixation element against the outer wall. In this way, once the driving force used to extend the mounting tool is removed, the mounting tool retracts under this biasing force of the biasing element to lock the fixation element in position against the internal surface of the outer wall. Preferably the biasing element comprises a spring arranged around the shaft of the mounting tool. Preferably the spring is held between a surface of the proximal end of the shaft and an opposing surface within the sensor housing such that the spring is compressed as the mounting tool extends through the first opening.

Preferably the mountable sensor further comprises a gasket around the opening in the sensor housing, the gasket arranged to provide a sealed passage between the mounting tool opening in the sensor housing and the perforation in use. The gasket is preferably an annular seal arranged around the first opening. The gasket is arranged to provide a sealed interface between the first opening of the sensor housing and the perforation in use, allowing the sensing element to obtain an accurate reading of one or more internal properties within the internal volume defined by the outer wall.

Preferably the shaft comprises an engagement feature on a proximal end, the engagement feature configured such that an external force can be applied to the shaft to provide the movement of the mounting tool; and the sensor housing comprises a second opening on an opposite side of the housing to the first opening, the second opening allowing access to the engagement feature so that an external force can be applied to move the mounting tool. This allows a driver to be applied to the engagement feature through the second opening in order to apply a driving force to move the mounting tool linearly and/or rotationally. The engagement feature preferably comprises a shaped recess or protrusion, for example a recess with a hexagonal cross-section. For example the engagement feature may be configured to be engaged with a handheld torque wrench, a handheld drill or any other type of driver.

Preferably the sensing element comprises one or more of: a relative humidity sensor; a temperature sensor; a water presence sensor; a pressure sensor; an camera; a vibration sensor; a gas/leak sensor; a smoke detector. The mountable sensor may comprise one or more additional sensing elements on or in an external surface of the sensor housing. For example, one of the sensors defined above.

The mountable sensor may further comprise one or more of a mesh node device; a drain plug and a valve.

Preferably the mountable sensor further comprises a transmitter for wireless transmitting data collected by the sensing element.

The mountable sensor may further comprise a transmitter and receiver for wireless data collected by the sensing element, the transmitter and receiving also configured to act as a mesh node device.

In another aspect of the invention there is provided a mountable device for mounting on a conduit or chamber comprising an outer wall defining an internal volume, the mountable device comprising: a device housing comprising a first opening; a moveable mounting tool comprising a shaft and, at a distal end of the shaft, a perforation element configured to perforate the outer wall and a fixation element arranged to subsequently enter the perforation and engage when inside the outer wall to prevent retraction of the mounting tool; wherein the mounting tool is configured to extend out through the first opening in the device housing such that, when the mountable sensor or device is positioned against the outer wall in use, the perforation element penetrates the outer wall to produce a perforation and the fixation element enters the perforation and engages to secure the device housing to the fluid conduit.

The mountable device therefore provides a device which can simultaneously perforate and secure to the outer wall of fluid transport or storage equipment such as cladded pipes or air ducts. The mountable device therefore provides means to mount a device such as a sensor, camera or valve to the outside of a conduit or chamber. The mountable device comprises one or more sensors and/or functional elements for attaching to the outer wall of any sealed volume and for either monitoring conditions on either side of the plate or adding extra functionality such as drainage.

The mounting tool may be as described above in respect of the mountable sensor, thereby providing a reliable mounting mechanism for fixing a device to an outer shell, cladding or housing by perforating this outer wall and securing the fixation element inside.

The mounting device may comprises one or more of a relative humidity sensor; a temperature sensor; a water presence sensor; a pressure sensor; an camera; a vibration sensor; a gas/leak sensor; a smoke detector; mounted on or in the device housing.

The mountable device may comprises one or more of a valve or a drain plug or an opening wherein the mountable device is configured to drain a fluid from the conduit or chamber through the perforation created by the perforation element. In particular the mountable device may be secured to the outer wall with the mounting tool by perforating the outer wall and securing the mounting tool within the outer wall. A valve may be positioned within the device housing wherein the valve is controllable to release a fluid from within the outer wall. The valve may be remotely controlled or preprogramed. Preferably the mountable device comprises an annular seal to provide a sealed path between the internal volume and the valve within the device housing to provide a fluid flow path into the device housing and out through the valve.

### BRIEF DESCRIPTION OF THE DRAWINGS

Embodiments of the invention will now be described, by way of example only, with reference to the accompanying drawings, in which:
Figures 1A and 1B schematically illustrate a mountable sensor according to the present invention with the mounting tool in a retracted and extended configuration respectively;
Figures 2A to 2C schematically illustrate a method of mounting a mountable sensor according to the present invention;
Figures 3A and 3B schematically illustrate a mountable sensor according to the present invention with the mounting tool in a retracted and extended configuration respectively;
Figures 4A and 4B schematically illustrate a mountable sensor according to the present invention with the mounting tool in a retracted and extended configuration respectively.

### DETAILED DESCRIPTION

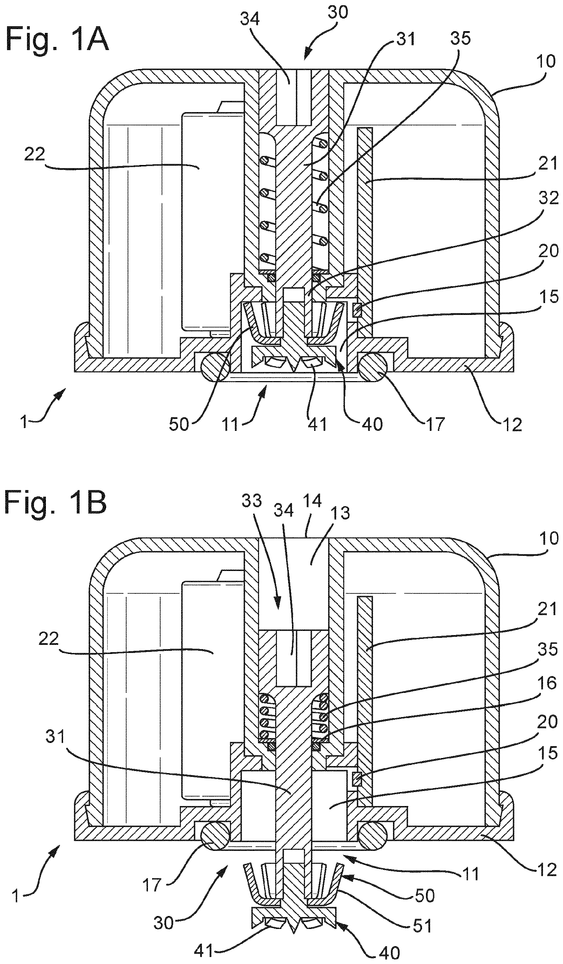

Figures 1A and 1B schematically illustrate a mountable sensor 1 for measuring a parameter within a conduit or chamber comprising an outer wall defining an enclosed internal volume. For example the mountable sensor 1 allows for monitoring of the atmosphere within the cladding of cladded processing equipment such as a cladded pipe or the internal volume within an air duct, whilst being mounted externally. The mountable sensor 1 includes an outer sensor housing 10 which houses the internal components, including a sensing element 20. The sensor housing 10 comprises an engagement surface 12 arranged to contact the cladding of the cladded processing equipment to be monitored. The engagement surface 12 comprises a first opening 11 which lies against the cladding of the cladded processing equipment in use. The sensing element 20 is configured to sense one or more parameters relating to the internal atmosphere within the outer wall, in particular the relative humidity and/or temperature. The mountable sensor 1 further includes a moveable mounting tool 30 comprising a shaft 31 and, at a distal end 32 of the shaft 31, a perforation element 40 configured to perforate the outer wall of fluid conduit or vessel and a fixation element 50 arranged to subsequently enter the perforation created by the perforation element and engage when inside the outer wall to prevent retraction of the mounting tool 30.

The mounting tool 30 is configured to extend out through the first opening 11 in the sensor housing 10 to perforate the outer wall of a fluid (i.e. liquid or gas) conduit or vessel in use with the perforation element 40 and subsequently extend the fixation element through the perforation to engage within the outer wall and secure the sensor housing 10 to the outer surface of the fluid conduit or vessel, thereby placing the sensing element 20 in communication with the internal volume through the perforation. The mountable sensor 1 according to the present invention can therefore simultaneously puncture the outer wall of a fluid conduit or vessel and attach to the outer wall to provide access to the internal volume of the conduit or vessel to monitor the conditions.

The present invention is configured for monitoring the internal parameters of cladded processing equipment and other forms of fluid conduit and chambers, such as ducts, pipes, vessels and valves, commonly used in processing industries. The invention is particularly suited to monitoring as the internal properties of cladded pipes which are commonly used across processing facilities for carrying hot or cold liquid/gas/process medium. The cladding (also called the casing or mantling) keeps the insulation in place around the pipe and also is intended to ensure the insulation is kept dry from outside water and humidity. The cladding is normally constructed from stainless steel (such as stainless steel 304 or 316) or aluminium. Such cladding and insulation is used across pipe networks as well as valves, tanks and carbon process vessels. However, it is common for liquid to ingress into the insulation at which point it cannot evaporate and results in corrosion under the insulation of the pipe which is difficult to detect.

The sensor of the present invention therefore allows for monitoring of this corrosion and the humidity and temperature which lead to it at any required location across a processing plant. Although the invention is described below in reference to its use on a cladded insulated pipe, the same principles apply to use on any other piece of cladded processing equipment which might succumb to CUI or other forms of, in addition to any form of sealed volume such as fluid conduits and vessels more generally.

The mountable sensor 1 provides a simple mounting mechanism which can simultaneously puncture the cladding and secure the sensor housing in a sealed arrangement around the puncture to monitor the presence of corrosion under insulation (CUI) at a chosen point. Unlike known destructive methods for monitoring CUI, the present invention allows for continued use of the pipe segment while the sensor is installed and does not require removal or replacement of parts of the processing equipment. It can also be applied to monitor the internal properties of the pipe in the straightforward manner, after insulation of the pipe, in comparison to some known sensors which must be installed prior to installation of the pipe sections. Because the moveable mounting tool comprises a shaft with both a perforation element and a fixation element, a single motion of the shaft can both puncture and attach the mountable sensor 1 in the desired location. The moveable mounting tool may be driven by an external force, such as a hand held drill. This is facilitated by the simplified mounting mechanism present within the mountable sensor 1, as will be described in more detail below.

As shown in Figures 1A and 1B, the sensor housing 10 defines an internal volume with an engagement surface 12 arranged to be positioned against a pipe to be monitored. The mounting tool 30 is aligned along central axis of the housing 10 and is linearly moveable from a retracted configuration, as shown in Figure 1A, in which it is housed within the sensor housing 10 and an extended configuration, as shown in Figure 1B in which the perforation element 40 and fixation element 50 emerge through the opening 11 in the engagement surface 12 of the sensor housing. A gasket 17 provides an annular seal around the first opening to provide a sealed passage between the first opening and a perforation created in the cladding by the mounting tool 30.

In this example, the perforation element 40 comprises a drill bit 41 comprising a number of abrasive milling features for milling through the external cladding of a pipe. The shaft 31 of the mounting tool 30 is rotatable under an externally applied force in order to rotate the shaft and drill bit 41 to mill through the cladding of a pipe. The moveable mounting tool 30 is therefore configured to move linearly in a direction corresponding to the shaft axis, as shown between Figures 1A and 1B, and also is configured to rotate under the externally applied force to provide the drilling action. The mounting tool 30 is arranged to accept an externally applied driving force to provide the linear extension and rotation to provide the drilling action. In particular, the mounting tool 30 is supported within an internal cavity 30 within the housing 10 aligned through the central axis of the sensor housing 10. In this way the mounting tool 30 is supported and allowed to move linearly through the central cavity 30 as shown in Figures 1A and 1B.

As described above, the perforation element 40 and the fixation element 50 are positioned at a first, distal end of the shaft 31 which is arranged so as to emerge from the first opening 11 in the sensor housing 10. The opposite, proximal end 33 of the shaft 31 is configured to accept the external driving force. The sensor housing 10 has a second opening 14 leading to the cavity 13 supporting the mounting tool 30, such that the second opening 14 allows for access to the proximal end 33 of the shaft 31 to drive the mounting tool 30. The proximal end 33 of the shaft 31 comprises an engagement feature 34 to which an external force may be applied. In particular, this may be a recess 44 or nut 34 to which a drill bit may be inserted in order to apply the rotational force to the mounting tool 30. In this way, the sensor housing 10 may be positioned against a pipe and an operator may engage the mounting tool 30 with a driver, such as an electric drill, in order to provide the linear and rotational forces to mill through the pipe cladding and secure the sensor at the required position with the fixation element 50.

In the example of Figure 1, the fixation element 50 comprises a plurality of prongs arranged around the circumference of the shaft 31 on the proximal side of the perforation element 40. In particular the mounting tool 30 is arranged such that the perforation element 40, in this case the drill bit 41, is positioned at the far leading end of the shaft 31 such that it meets the pipe cladding first and the prongs 51 of the fixation element are arranged around the shaft adjacent to a rear surface of the drill bit 41. In this way the prongs 51 enter the perforation created by the drill bit 41 as the mounting tool continues to extend. The prongs 51 of the fixation element are arranged such that they can pass distally through the perforation produced by the drill bit 41 as they enter the cladding but cannot be retracted back through the cladding. In particular, the fixation element 50 can move between a collapsed configuration (or narrower, compact configuration) as the fixation element passes through the perforation and a wider expanded configuration as shown in Figure 1B when the mounting tool is fully inserted through the cladding. This may be achieved in a number of different ways.

In the example of Figure 1 the prongs 51 are angled and curved backward pointing away from the direction of insertion of the perforation element 40 to act as barbs that can pass through the perforation distally but then engage and cannot be retracted. The radial extension of the prongs 51 is greater than the radius of the perforation element 40 such that the fixation element 50 extends radially by a greater amount than the size of the perforation created by the perforation element 40, to prevent retraction. In particular, in the example of Figure 1, the prongs 51 are biased into the expanded configuration shown in Figure 1B but can move inwards under a radially inward force as the fixation element 50 passes through the perforation such that the prongs 51 bend inwards to allow them to pass through the perforation but are returned to their expanded configuration under the biasing force as soon as they pass through the perforation in the cladding.

The biasing force may be provided by the elasticity in the prongs themselves, i.e. they may be made of material which allows them to bend inwards and then spring outwards to return to their expanded configuration. Alternatively springs or other biasing features may be used to bias the prongs into an expanded configuration. The prongs may also pivot about a hinged connection point with the mounting tool shaft 31. In some examples, the mountable sensor 1 may comprise a delivery passage 15 which houses the perforation element 40 and the fixation element 50 when in the retracted configuration as shown in Figure 1A. The diameter of the delivery passage 15 may be such as to constrain the fixation element into the collapsed configuration, i.e. the delivery passage may have a diameter which is less than the radial extension of the fixation element 50 when in the expanded configuration. In this way, as the mounting tool 30 slides from the retracted configuration in Figure 1A to the extended configuration in which the fixation element moves out of the delivery passage through the perforation and into the external volume of the cladding the constraint on the fixation element is removed such that they spring into the expanded configuration shown in Figure 1B to prevent retraction through the cladding.

The sensor element 20 is positioned in a number of different locations such that it is placed in communication with the internal atmosphere of the pipe via the perforation made by the mounting tool 30. For example the sensor may be placed within the sensor housing or on the mounting tool itself such that it may detect various properties of the insulation internal to the cladding once the puncture has been made by the mounting tool 30. The sensing element 20 may comprise one or more sensors such as a relative humidity sensor, a temperature sensor, an infrared camera, accelerometer or transducer. The sensing element is connected to a PCB 21 and a battery 22. In this way, data collected by the sensing element may be stored in an internal memory on the PCB. Furthermore, the PCB may additionally include a transmitter for transmitting the sensor data wirelessly to a remote location. In this way multiple mountable sensors may be mounted around a processing network and the data collected centrally for monitoring.

As described above, the elongate mounting tool is supported within a central cavity 13 such that it may move linearly through the sensor housing 10 between the retracted configuration of Figure 1A and the extended configuration of Figure 1B. The mountable sensor 1 may further comprise a biasing element 35, in this case in the form of a spring 35, which is configured to apply a retracting force on the mounting element to retract the mounting tool 30 once inside the cladding to lock the sensor housing in place. In particular, in the example of Figure 1, a spring 35 is positioned around the shaft 31 of the mounting tool 30, within the cavity 13, such that the spring is compressed as a driving force is applied to the mounting tool 30 to move it into the extended configuration of Figure 1B. In this way, when the driving force is removed, the spring 35 exerts a retracting force to pull the fixation element 50 against the inner surface of the cladding around the perforation in order to lock the sensor housing 10 against the outer surface of the cladding around the perforation.

As shown in Figure 1 the cavity 13 within the sensor housing 10 which supports the mounting tool 30 may comprise a shoulder 16 which provides a supporting surface for the spring 13. The mounting tool shaft has an increased diameter at the proximal end 33 which includes the engagement feature 34 for applying the external force the diameter of the shaft 31 then narrows along the central portion of the mounting tool shaft 31 with the fixation element 50 and perforation element 40 provided at the distal end. The spring 35 is enclosed in the mounting tool cavity 13 between the larger diameter proximal end of the shaft 31 and the shoulder 16 of the cavity 13. In this way, the spring is compressed between the opposing surfaces of the proximal end of the shaft and the should 16 of the shaft cavity 13 as the mounting tool extends into the extended configuration shown in Figure 1B.

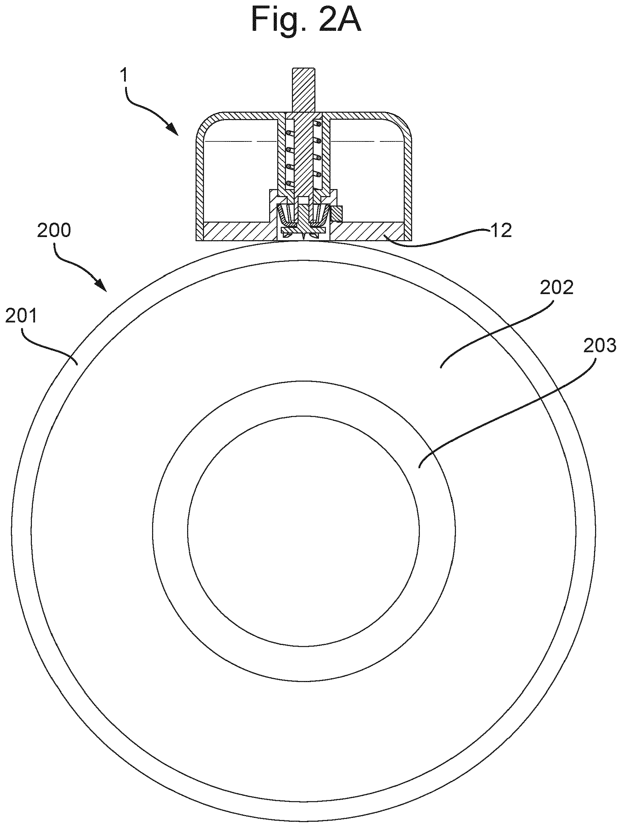

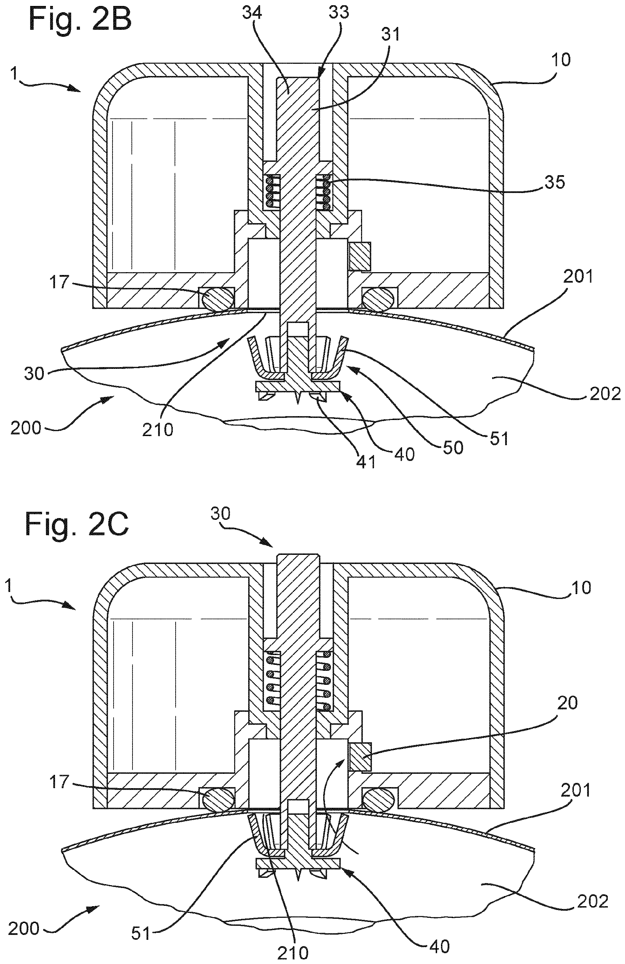

The method of attaching the mountable sensor 1 will now be described with reference to Figure 2. The method is illustrated for attachment to a cladded and insulated pipe 200 but the sensor may equally be applied to other types of cladded process equipment, such as valves, tanks and carbon process vessels which are all exposed to CUI and require monitoring so are suitable for use with the sensor according to the present invention. The mountable sensor 1 may be applied to any cladded process equipment comprising an external cladding where the internal atmosphere of the cladding needs to be monitored.

Figure 2A schematically illustrates an insulated and cladded pipe 200 which may be monitored using the mountable sensor 1 according to the present invention to determine the presence of CUI, as well as other parameters relating to the internal environment within the pipe. The cladded pipe comprises an outer cladding layer 201 which encloses an internal insulation layer 202 which itself encloses the pipe 203. Any ingress of water into the insulation can cause corrosion of the pipe 203 which can go unnoticed if not carefully monitored. The sensor 1 according to the present invention can be attached to the cladding of such processing equipment to monitor properties within the cladding 201 and insulation 202 and collect this data to be stored and monitored at a central location. As shown in Figure 2A, the mountable sensor 1 is placed on a location of the outer cladding of the pipe 200 corresponding to a point at which CUI should be monitored. The engagement surface 12 and the first opening 11 in the engagement surface 12 are placed against the outer surface of the cladding 201 as shown in Figure 2A.

The mounting procedure is performed by positioning the sensor 1 and driving the mounting tool 30. Once the mounting sensor 1 is positioned with the gasket 17 which surrounds the first opening 11 against the outer surface of the cladding, the mounting tool is engaged as shown in Figures 2B and 2C. In particular a driving mechanism is engaged with the engagement feature 34 at the proximal end 33 of the mounting tool 30. As described above, the proximal end 33 of the mounting tool 30 may comprise a shaped cavity into which a driver can be inserted to provide the rotational and linear movement of the mounting tool 30.

Preferably, the engagement feature 34 may simply be a hexagonal nut into which a driver can be inserted to provide the required forces. In this way the installation can be carried out manually by using an electric drill or wrench, simply by holding the sensor housing 10 in place against the pipe 200 cladding 201 and engaging the drill or driver with the proximal end of the mounting shaft 31 and driving the mounting tool 30 from its retracted position (as shown in Figure 1A) into its extended position (as shown in Figure 1B) such that it translates axially along a direction corresponding to the axis of the shaft 31 of the mounting tool 30 and rotates to mill through the outer cladding 201 with the drill bit 41 to produce a perforation 210 in the outer cladding 201. Once the drill bit 41 mills through the cladding the mounting tool 30 continues to extend in a linear direction, extending out of the first opening 11 through the perforation 210 created in the cladding 201 and into the insulation 202 of the pipe 200 as shown in Figure 2B.

The prongs 51 of the fixation element are moved radially inward by the edges of the perforation as the milled edge of the cladding 201 contacts the angled surfaces of the prongs 51 causing them to bend inwards as the mounting tool continues to extend into the cladding, allowing the prongs 51 to pass through the perforation 210 created. Once the prongs 51 have passed through the perforation 210 they expand radially under the biasing force to increase their radial extension beyond the diameter of the perforation 210.

As shown in Figure 2B as the mounting tool is extended into the pipe through the perforation 210 and the cladding 201 the spring 35 around the shaft 31 of the mounting tool 30 is compressed under the driving force applied by the external driver. Once the driving force is removed, for example when the operator removes the drill or of the driver from the engagement feature 34 of the mounting tool shaft 31 the compressed spring 35 applies a biasing force in a direction so as to retract the mounting tool as shown in Figure 2C. The mounting tool 30 is therefore retracted until the prongs 51 meet the internal surface of the cladding 201 around the perforation 210 or engage with the insulation 202, thus preventing further retraction of the mounting tool 30.

In this configuration, as shown in Figure 2C, the spring is still partially compressed and the biasing force applied is sufficient to hold the sensor housing tightly against the outer surface of the cladding 201 of the pipe 200 such that the mountable sensor 1 is secured against the cladding 201. As shown in Figure 2C the gasket 35 provides an annular seal between the first opening 11 of the sensor housing 10 and the perforation 210 in the cladding 201, thereby providing a sealed path between the internal volume of the cladding 201 and the internal volume of the sensor housing 10, including the sensing element 20. The sensing element 20 can therefore detect and measure parameters relating to the insulation 202 and internal conditions of the pipe 200. For example, the sensing element may be a relative humidity and/or temperature sensor which is placed in fluidic communication with the insulation 202 of the pipe 200 such that the temperature and humidity can be detected. The data collected by the sensing element 20 may then be transmitted to a remote central location for logging and monitoring for conditions indicative of CUI or other deterioration signals relating to the internal atmosphere of the pipe.

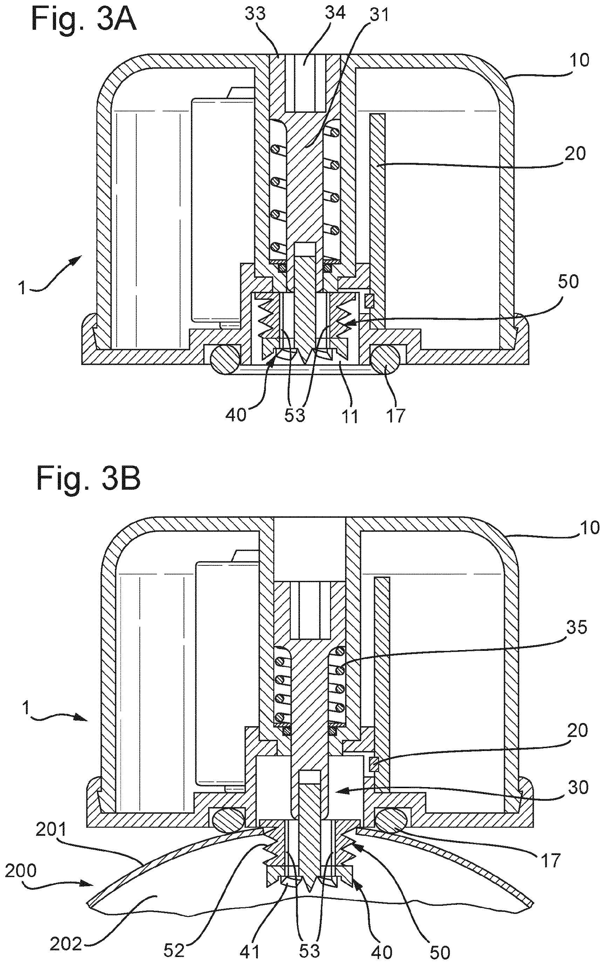

Figures 3A and 3B schematically illustrate an alternative embodiment of the mountable sensor 1 according to the present invention. The mountable sensor 1 shown in Figures 3A and 3B is identical to that illustrated in Figures 1 and 2 but uses an alternative fixation element 50. In particular, rather than using an expandable fixation element 50, such as a series of circumferential prongs 51, the fixation element 50 in Figures 3A and 3B comprises a threaded portion 52 of the mounting tool 30 shaft 31. The threaded portion 52 of the shaft 31 is configured such that as the mounting tool 30 rotates under the driving force and engages with the cladding, the ridges of the threaded section 52 bite into the cladding 201 (and optionally also the insulation 202) so as to secure the fixation element within the cladding (and insulation 202). The threaded section 52 and the drill bit 41 furthermore comprises one or more passages 53 which provide open channels connecting a font face of the drill bit and a rear side of the threaded section. The passages 53 are arranged such that they provide fluidic communication through the drill bit 41 and the threaded section 52 such that, when the threaded section 52 is secured within the perforation, the passages 53 provide the required communication between the sensor element 20 and the internal volume of the cladding 201.

In this example the diameter of the threaded section 52 is approximately similar to the diameter of the drill bit 41 such that the drill bit 41 creates a perforation of the correct size such that the ridges of the threaded section 52 bite into the cladding and insulation to secure the fixation element 50 in position and prevent retraction of the mounting tool 30, such that the biasing force of the spring 35 locks the sensor housing 10 against the outer surface of the cladding 201, with the annular seal of the gasket 17 creating a sealed passage between the internal atmosphere of the pipe 200 and the internal volume of the sensor housing 10 including the sensor element 20. As before, the mounting tool 30 comprises an engagement feature in the proximal end 33 of the shaft 31 to allow the mounting tool 30 to be both rotated and linearly advanced into the cladding 201 of the pipe 200. As with the device of Figure 1 and Figure 2, the mountable sensor 1 may be attached to a pipe or other cladded processing equipment by a human operator who simply holds the sensor housing in place and drives the mounting tool with a driver, such as a hand held electric drill or wrench, alternatively it may be installed by applying any other form of driver to provide the required rotational and linear forces to secure the sensor in position.

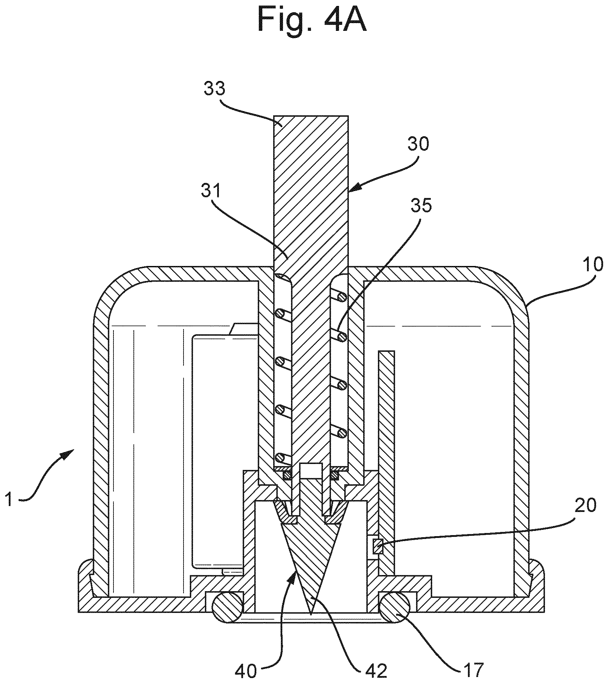

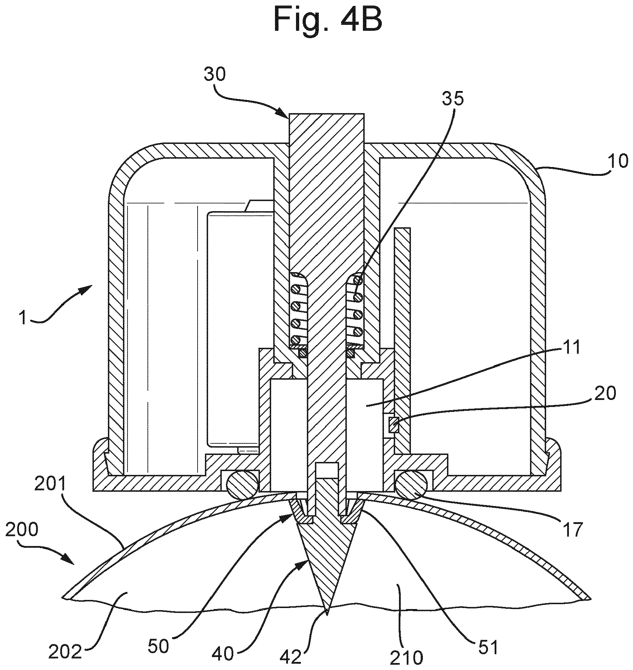

Figures 4A and 4B schematically illustrate a mountable sensor 1 according to the present invention with an alternative mounting tool 30. The mounting tool 30 in the mountable sensor 1 of Figure 4 does not use a drilling or milling action to provide the perforation 210 in the cladding 201 but instead uses a linear piercing action to puncture the cladding before fixing the mounting tool 30 in place with the fixation element 50. In this example of the present invention, the perforation element comprises a puncturing element 42 with a sharp point configured to puncture the cladding 201 when a linear force is applied to move the mounting tool 30 from the retracted configuration shown in Figure 4A into the extended configuration shown in Figure 4B. The puncturing element 42 may have a pointed or arrow like shape with a pointed leading tip for piercing the cladding 201. The fixation element 50 again may be provided by two or more prongs 51 which can move inwards to allow them to pass through the perforation 210 created by the puncturing element 42, after which they expand radially outwards to prevent retraction of the mounting tool 30.

Again, the prongs 51 may be angled to aid in encouraging them to pass through the perforation 210 and the angle of incline may match that of the pointed puncturing element 42 such that they provide barbs on the rear points of the puncturing element which are fold or are compressed inwards as they pass through the perforation and move radially outwards to prevent retraction.

As with the previously described examples of the invention, the mounting tool 30 comprises a biasing element 35, in this case in the form of a spring 35 coiled around the shaft 31 of the mounting tool 30. The spring 35, as described above, acts to provide a biasing force which retracts the mounting tool 30 once the driving force is removed to lock the sensor housing 10 against the outer surface of the cladding 201 of the pipe 200. Again, the gasket 17 provides an annular fluidic seal between the first opening 11 from which the mounting tool 30 emerges and the perforation 210. In this way, a sealed path is provided between the internal atmosphere of the pipe and the internal volume of the sensor housing 10, in which the sensing element 20 is positioned. This allows the temperature and humidity of the internal volume of the pipe to be detected by the sensing element 20.

In this example of the mountable sensor 1, again the mounting tool 30 is driven by the application of an external force to the proximal end 33 of the mounting tool shaft 31. However, this example differs in that no rotational movement is required but the driving force is simply a linear force required to drive the puncturing element 42 through the cladding 201 of the pipe 200. For example, the engagement feature may simply be a flat surface on the proximal end 33 of the shaft 31 which may be struck with a hammer by a human operator to drive the mounting tool into the cladding 201 of the pipe 200. As soon as the mounting tool 30 decelerates after the hammer below the biasing force will act to retract the mounting tool and lock the sensor housing 10 in position as the prongs 51 engage inside the cladding 201.

As described above a common advantage of the embodiments of the present invention is that a single motion may be used to both puncture the cladding and secure the sensor 1 in position to place the sensing element 20 in communication with the internal atmosphere of the cladded processing equipment 200. The mounting tool 30 may be driven in a straightforward manner by the second opening to reach the engagement feature 34 at the proximal end 33 of the mounting tool 30.

The sensors 1 according to the present invention may therefore be deployed in a straightforward and cost effective manner, the mountable sensors 1 of the present invention may be deployed across a large area at desired locations to monitor the internal parameters of cladded processing equipment 200. Data can be collected from across the plurality of sensors across the processing plant to constantly monitor the internal parameters of the processing equipment and identify the build-up of CUI at an early stage, meaning the corresponding portions of the processing equipment can be managed or replaced before failure. The mountable sensor of the present invention therefore allows for much more cost effective monitoring of CUI and other internal conditions of processing equipment which reduces the amount of manpower and costs associated with known means of testing process lines.

## Claims

1. A mountable sensor (1) for measuring a parameter within a conduit or chamber comprising an outer wall defining an enclosed internal volume, the mountable sensor comprising:
a sensor housing (10) comprising a first opening;
a sensing element (20) positioned within the housing;
a moveable mounting tool (30) comprising a shaft (31) and, at a distal end (32) of the shaft (31), a perforation element (40) configured to perforate the outer wall of a conduit or chamber and a fixation element (50) arranged to subsequently enter the perforation and engage when inside the outer wall to prevent retraction of the mounting tool (30); wherein
the mounting tool (30) is configured to extend out through the first opening in the sensor housing (10) such that, when the mountable sensor (1) is positioned against the outer wall of a chamber or conduit in use, the perforation element (40) penetrates the outer wall to produce a perforation and the fixation element (50) enters the perforation and engages to secure the sensor housing (10) to the outer wall; thereby placing the sensing element (20) in communication with the internal volume of the chamber or conduit through the perforation.

2. The mountable sensor (1) of claim 1 wherein the mountable sensor (1) is configured for measuring a parameter within cladded and insulated process equipment comprising an outer cladding layer and an internal insulation layer; and, in use, the perforation element (40) is configured to penetrate the cladding of the cladded and insulated process equipment to produce a perforation and the fixation element (50) is configured to enter the perforation and engage to secure the sensor housing (10) to an outer surface of the cladding; thereby placing the sensing element (20) in communication with the internal volume of the cladding through the perforation.

3. The mountable sensor (1) of claim 1 or claim 2 wherein the perforation element (40) comprises a drill bit and the shaft is rotatable to provide a drilling action for drilling through the outer wall in use.

4. The mountable sensor (1) of claim 1 or claim 2 wherein the perforation element (40) comprises a puncturing element and the shaft is configured to move axially to provide an axial puncturing force with the puncturing element for perforating the outer wall in use.

5. The mountable sensor (1) of any preceding claim wherein the fixation element (50) comprises an expandable fixation element configured to pass through the perforation in the outer wall in a collapsed configuration and subsequently expand into an expanded configuration when inside the outer wall to prevent retraction of the mounting tool (30).

6. The mountable sensor (1) of claim 5 wherein the expandable fixation element (50) comprises a plurality of prongs (51) arranged around the circumference of the shaft, the prongs (51) biased into the expanded configuration such that the prongs move radially outward when they have passed through the perforation to engage the inner surface of the outer wall around the perforation and prevent retraction of the mounting tool (30).

7. The mountable sensor (1) of claims 1 to 3 wherein the fixation element (50) comprises a threaded portion of the shaft (31) configured to screw into the perforation in the outer wall to prevent retraction of the mounting tool; and the shaft further comprises a passageway arranged to provide the communication between the internal volume of the outer wall and the sensor element when the threaded portion is screwed into the perforation.

8. The mountable sensor (1) of any preceding claim further comprising a biasing element (35) arranged to apply a biasing force to the shaft (31) in a direction so as to retract the mounting tool once the fixation element (50) enters the perforation to lock the fixation element (50) against the outer wall.

9. The mountable sensor (1) of claim 8 wherein biasing element (35) is a spring arranged around the shaft (31) of the mounting tool (30).

10. The mounting sensor (1) of any preceding claim further comprising a gasket (17) around the opening in the sensor housing (10), the gasket (17) arranged to provide a sealed passage between the first opening in the sensor housing (10) and the perforation in use.

11. The mountable sensor (1) of any preceding claim wherein the shaft (31) comprises an engagement feature (34) on a proximal end, the engagement feature (34) configured such that an external force can be applied to the shaft (31) to provide the movement of the mounting tool (30); and
the sensor housing (10) comprises a second opening on an opposite side of the housing to the first opening, the second opening allowing access to the engagement feature (34) so that an external force can be applied to move the mounting tool.

12. The mountable sensor (1) of any preceding claim wherein sensing element (20) comprises one or more of:
a relative humidity sensor;
a temperature sensor;
a water presence sensor;
a pressure sensor;
a camera;
a vibration sensor;
a gas/leak sensor;
a smoke detector.

13. The mountable sensor (1) of any preceding claim further comprising a transmitter for wirelessly transmitting data collected by the sensing element.

## Patentansprüche

1. Montierbarer Sensor (1) zur Messung eines Parameters innerhalb einer Rohrleitung oder Kammer, die eine Außenwand umfasst, welche ein umschlossenes Innenvolumen definiert, wobei der montierbare Sensor umfasst:
Ein Sensorgehäuse (10), welches eine erste Öffnung umfasst,
ein Messelement (20), das innerhalb des Gehäuses positioniert ist,
ein bewegliches Montagewerkzeug (30), welches eine Welle (31) und, an einem fernen Ende (32) der Welle (31), ein Perforationselement (40), welches ausgelegt ist, die Außenwand einer Rohrleitung oder Kammer zu perforieren und ein Fixierungselement (50) umfasst, welches eingerichtet ist, anschließend in die Perforation einzudringen und, wenn im Innern der Außenwand, zu greifen, um das Zurückziehen des Montagewerkzeugs (30) zu verhindern; wobei
das Montagewerkzeug (30) ausgelegt ist, sich durch die erste Öffnung im Sensorgehäuse (10) derart zu erstrecken, dass, wenn der montierbare Sensor (1) im Gebrauch gegen die Außenwand einer Kammer oder Rohrleitung positioniert wird, das Perforationselement (40) die Außenwand durchdringt, um eine Perforation zu erzeugen und das Fixierungselement (50) dringt in die Perforation ein und greift, um das Sensorgehäuse (10) an die Außenwand zu sichern; dadurch wird das Messelement (20) durch die Perforation in Kommunikation mit dem Innenvolumen der Kammer oder Rohrleitung platziert.

2. Montierbarer Sensor (1) nach Anspruch 1, wobei der montierbare Sensor (1) zur Messung eines Parameters innerhalb verkleideter und isolierter Prozessausrüstung ausgelegt ist, die eine äußere Mantelschicht und eine interne Isolierschicht umfasst, und, im Gebrauch, das Perforationselement (40) ausgelegt ist, die Ummantelung der verkleideten und isolierten Prozessausrüstung zu durchdringen, um eine Perforation zu erzeugen, und das Fixierungselement (50) ausgelegt ist, in die Perforation einzudringen und zu greifen, um das Sensorgehäuse (10) an einer Außenfläche der Ummantelung zu sichern; dadurch wird das Messelement (20) durch die Perforation in Kommunikation mit dem Innenvolumen der Ummantelung platziert.

3. Montierbarer Sensor (1) nach Anspruch 1 oder Anspruch 2, wobei das Perforationselement (40) einen Bohrer umfasst und die Welle drehbar ist, um im Gebrauch eine Bohrbewegung zum Durchbohren der Außenwand bereitzustellen.

4. Montierbarer Sensor (1) nach Anspruch 1 oder Anspruch 2, wobei das Perforationselement (40) ein Lochungselement umfasst und die Welle ausgelegt ist, sich axial zu bewegen, um eine axiale Lochungskraft mit dem Lochungselement zum Perforieren der Außenwand im Gebrauch bereitzustellen.

5. Montierbarer Sensor (1) nach irgendeinem vorhergehenden Anspruch, wobei das Fixierungselement (50) ein expandierbares Fixierungselement umfasst, das ausgelegt ist, in einer zusammengeklappten Konfiguration durch die Perforation in der Außenwand hindurchzugehen und anschließend, wenn im Innern der Außenwand, in eine expandierte Konfiguration zu expandieren, um das Zurückziehen des Montagewerkszeugs (30) zu verhindern.

6. Montierbarer Sensor (1) nach Anspruch 5, wobei das expandierbare Fixierungselement (50) eine Vielzahl von Zinken (51) umfasst, die um den Umfang der Welle angeordnet sind, wobei die Zinken (51) in die expandierte Konfiguration derart vorgespannt sind, dass sich die Zinken radial nach außen bewegen, wenn sie durch die Perforation hindurch sind, um in die Innenfläche der Außenwand, um die Perforation herum zu greifen und das Zurückziehen des Montagewerkzeugs (30) zu verhindern.

7. Montierbarer Sensor (1) nach Ansprüchen 1 bis 3, wobei das Fixierungselement (50) einen Gewindeabschnitt der Welle (31) umfasst, der ausgelegt ist, in die Perforation in der Außenwand geschraubt zu werden, um das Zurückziehen des Montagewerkzeugs zu verhindern; und die Welle ferner einen Durchgang umfasst, der eingerichtet ist, die Kommunikation zwischen dem Innenvolumen der Außenwand und dem Sensorelement bereitzustellen, wenn der Gewindeabschnitt in die Perforation geschraubt ist.

8. Montierbarer Sensor (1) nach irgendeinem vorhergehenden Anspruch, der ferner ein Vorspannelement (35) umfasst, das eingerichtet ist, eine Vorspannkraft auf die Welle (31) in eine Richtung anzuwenden, um das Montagewerkzeug zurückzuziehen, sobald das Fixierungselement (50) in die Perforation eindringt, um das Fixierungselement (50) gegen die Außenwand zu verriegeln.

9. Montierbarer Sensor (1) nach Anspruch 8, wobei das Vorspannelement (35) eine Feder ist, die um die Welle (31) des Montagewerkzeugs (30) herum angeordnet ist.

10. Montagesensor (1) nach irgendeinem vorhergehenden Anspruch, der ferner eine Dichtung (17) um die Öffnung im Sensorgehäuse (10) umfasst, wobei die Dichtung (17) eingerichtet ist, einen abgedichteten Durchgang zwischen der ersten Öffnung im Sensorgehäuse (10) und der Perforation im Gebrauch bereitzustellen.

11. Montierbarer Sensor (1) nach irgendeinem vorhergehenden Anspruch, wobei die Welle (31) ein Eingriffsmerkmal (34) an einem nahen Ende umfasst, wobei das Eingriffsmerkmal (34) derart ausgelegt ist, dass sich eine externe Kraft auf die Welle (31) anwenden lässt, um die Bewegung des Montagewerkzeugs (30) bereitzustellen, und
das Sensorgehäuse (10) eine zweite Öffnung auf einer zur ersten Öffnung entgegengesetzten Seite des Gehäuses umfasst, wobei die zweite Öffnung Zugang zum Eingriffsmerkmal (34), sodass eine externe Kraft zum Bewegen des Montagewerkzeugs angewandt werden kann.

12. Montierbarer Sensor (1) nach irgendeinem vorhergehenden Anspruch, wobei das Messelement (20) eins oder mehrere von Folgenden umfasst:
Einen Sensor für relative Feuchtigkeit;
einen Temperatursensor;
einen Wasseranwesenheitssensor;
einen Drucksensor;
eine Kamera;
einen Vibrationssensor;
einen Gas-/Lecksensor;
einen Rauchmelder.

13. Montierbarer Sensor (1) nach irgendeinem vorhergehenden Anspruch, der ferner einen Sender zur drahtlosen Übertragung von Daten umfasst, die vom Messelement gesammelt wurden.

## Revendications

1. Capteur montable (1) pour mesurer un paramètre au sein d'un conduit ou d'une chambre comprenant une paroi extérieure définissant un volume interne clos, le capteur montable comprenant :
un boîtier de capteur (10) comprenant une première ouverture ;
un élément capteur (20) positionné au sein du boîtier ;
un outil de montage mobile (30) comprenant un arbre (31), et, à une extrémité distale (32) de l'arbre (31), un élément de perforation (40) configuré pour perforer la paroi extérieure d'un conduit ou d'une chambre, et un élément de fixation (50) agencé pour s'introduire par la suite dans la perforation et s'engager, lorsqu'il se trouve à l'intérieur de la paroi extérieure, pour empêcher le retrait de l'outil de montage (30) ;
l'outil de montage (30) étant configuré pour se déployer à travers la première ouverture dans le boîtier de capteur (10), de sorte que, lorsque le capteur montable (1) est positionné contre la paroi extérieure d'une chambre ou d'un conduit en cours d'usage, l'élément de perforation (40) pénètre dans la paroi extérieure pour produire une perforation, et l'élément de fixation (50) s'introduit dans la perforation et s'engage pour fixer le boîtier de capteur (10) sur la paroi extérieure, en mettant ainsi l'élément capteur (20) en communication avec le volume interne de la chambre ou du conduit à travers la perforation.

2. Capteur montable (1) selon la revendication 1, le capteur montable (1) étant configuré pour mesurer un paramètre au sein d'équipements de traitement gainés et isolés comprenant une couche de revêtement extérieure et une couche isolante interne ; et, en cours d'usage, l'élément de perforation (40) étant configuré pour pénétrer dans le revêtement de l'équipement de traitement gainé et isolé pour réaliser une perforation, et l'élément de fixation (50) étant configuré pour s'introduire dans la perforation et s'engager pour fixer le boîtier de capteur (10) sur une surface extérieure du revêtement, en mettant ainsi l'élément capteur (20) en communication avec le volume interne du revêtement à travers la perforation.

3. Capteur montable (1) selon la revendication 1 ou la revendication 2, l'élément de perforation (40) comprenant un foret, et l'arbre étant rotatif afin d'effectuer une action de perçage pour percer la paroi extérieure en cours d'usage.

4. Capteur montable (1) selon la revendication 1 ou la revendication 2, l'élément de perforation (40) comprenant un élément perforateur, et l'arbre étant configuré pour se déplacer dans le sens axial afin d'exercer une force de perforation axiale avec l'élément de perforation pour perforer la paroi extérieure en cours d'usage.

5. Capteur montable (1) selon une quelconque des revendications précédentes, l'élément de fixation (50) comprenant un élément de fixation expansible configuré pour traverser la perforation dans la paroi extérieure dans une configuration repliée, et se déployer ensuite dans une configuration déployée lorsqu'il se trouve à l'intérieur de la paroi extérieure pour empêcher la rétraction de l'outil de montage (30).

6. Capteur montable (1) selon la revendication 5, l'élément de fixation (50) expansible comprenant une pluralité de broches (51) agencées autour de la circonférence de l'arbre, les broches (51) étant sollicitées dans la configuration déployée de sortent que les broches se déplacent radialement vers l'extérieur après être passées à travers la perforation pour engager la surface intérieure de la paroi extérieure autour de la perforation, et empêcher la rétraction de l'outil de montage (30).

7. Capteur montable (1) selon une des revendications 1 à 3, l'élément de fixation (50) comprenant une partie filetée de l'arbre (31) configurée pour se visser dans la perforation dans la paroi extérieure pour empêcher la rétraction de l'outil de montage ; et l'arbre comprenant en outre un passage agencé pour permettre la communication entre le volume interne de la paroi extérieure et l'élément capteur lorsque la partie filetée est vissée dans la perforation.

8. Capteur montable (1) selon une quelconque des revendications précédentes, comprenant en outre un élément de sollicitation (35) agencé pour appliquer une force de sollicitation sur l'arbre (31) dans une direction, de façon à rétracter l'outil de montage lors de l'introduction de l'élément de fixation (50) dans la perforation pour verrouiller l'élément de fixation (50) contre la paroi extérieure.

9. Capteur montable (1) selon la revendication 8, l'élément de sollicitation (35) étant un ressort agencé autour de l'arbre (31) de l'outil de montage (30).

10. Capteur montable (1) selon une quelconque des revendications précédentes, comprenant en outre un joint (17) autour de l'ouverture dans le boîtier du capteur (10), le joint (17) étant agencé pour former un passage étanche entre la première ouverture dans le boîtier du capteur (10) et la perforation en cours d'usage.

11. Capteur montable (1) selon une quelconque des revendications précédentes, l'arbre (31) comprenant un dispositif d'engagement (34) sur une extrémité proximale, le dispositif d'engagement (34) étant configuré de sorte qu'une force externe puisse être exercée sur l'arbre (31) pour permettre le déplacement de l'outil de montage (30) ; et
le boîtier du capteur (10) comprenant une deuxième ouverture sur un côté opposé du boîtier par rapport à la première ouverture, la deuxième ouverture permettant l'accès au dispositif d'engagement (34) afin qu'une force externe puisse être exercée pour déplacer l'outil de montage.

12. Capteur montable (1) selon une quelconque des revendications précédentes, l'élément capteur (20) comprenant un ou plusieurs des suivants :
un capteur d'humidité relative ;
un capteur de température ;
un capteur de présence d'eau ;
un capteur de pression ;
une caméra ;
un capteur de vibrations ;
un détecteur de gaz / fuites ;
un détecteur de fumée.

13. Capteur montable (1) selon une quelconque des revendications précédentes, comprenant en outre un transmetteur pour la transmission sans fil de données recueillies par l'élément capteur.
